(19) Europäisches Patentamt
European Patent Office
Office européen des brevets

(11) EP 3 772 028 A1

(12) **EUROPEAN PATENT APPLICATION**

(43) Date of publication:
03.02.2021 Bulletin 2021/05

(51) Int Cl.:
*G06Q 10/06* (2012.01)

(21) Application number: 19189037.5

(22) Date of filing: 30.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Bayerische Motoren Werke
Aktiengesellschaft
80809 München (DE)

(72) Inventors:
• Syed, Arslan Ali
80937 München (DE)
• Akhnoukh, Karim
80797 München (DE)

(54) **METHOD AND SYSTEM FOR ROUTING A PLURALITY OF VEHICLES USING A NEURAL NETWORK**

(57) The present disclosure provides a method for routing a plurality of vehicles, comprising receiving a plurality of user requests each requesting a vehicle, wherein each of the plurality of user requests includes a start position and an end position; assigning, to each vehicle of the plurality of vehicles, a number $n$ of slots representing a path of the vehicle; and calculating, for each vehicle of the plurality of vehicles, a respective route based on the plurality of user requests and the slots.

<u>100</u>

```
┌─────────────────────────────────────────────┐
│  receiving a plurality of user requests each │
│  requesting a vehicle, wherein each of the   │      110
│  plurality of user requests includes a start │
│  position and an end position                │
└─────────────────────────────────────────────┘
                     │
                     ▼
┌─────────────────────────────────────────────┐
│  assigning, to each vehicle of the plurality │      120
│  of vehicles, a number n of slots            │
│  representing a path of the vehicle          │
└─────────────────────────────────────────────┘
                     │
                     ▼
┌─────────────────────────────────────────────┐
│  calculating, for each vehicle of the        │
│  plurality of vehicles, a respective route   │      130
│  based on the plurality of user requests     │
│  and the slots                               │
└─────────────────────────────────────────────┘
```

Fig. 1

**Description**

**FIELD**

Embodiments of the present disclosure relate to a method and system for routing a plurality of vehicles e.g. using a neural network. Embodiments of the present disclosure particularly relate to a Neural Network based Large Neighborhood Search Algorithm for Ride Hailing (RH) Services.

**BACKGROUND**

Ride Hailing (RH) services have become common in many cities. An important aspect of such services is the optimal matching between vehicles and customer requests, which is very close to the classical Vehicle Routing Problem with Time Windows (VRPTW). The large-scale availability of high-speed wireless internet and the widespread usage of smartphones has marked the beginning of many new and innovative transportation services. A lot of focus is now put on viewing people's mobility as a service. Among such services, Ride Hailing (RH) has gained a lot of attention, where a user can order a ride on short notice via a mobile app.

An important aspect in RH is how to match the vehicles to customer requests such that various user and business-oriented goals are optimized. Traditionally, this optimization problem comes under the window of Vehicle Routing Problem with Time Windows (VRPTW) or more specifically Dial a Ride Problem (DARP), for which currently Large Neighborhood Search (LNS) based algorithms provide state of the art solutions. The dynamic addition of new requests and the limited calculation time provide the biggest challenge for an efficient real time matching algorithm in RH.

In view of the above, new methods and systems for routing a plurality of vehicles, that overcome at least some of the problems in the art are beneficial.

**SUMMARY**

In light of the above, a method and a system for routing a plurality of vehicles are provided. It is an object of the present disclosure to provide a more efficient routing of a plurality of vehicles to reduce vehicle emissions, such as carbon dioxide emission. Further, it is an object of the present disclosure to provide a more efficient routing of a plurality of vehicles to reduce fuel consumption and/or a consumption of electrical energy.

Further aspects, benefits, and features of the present disclosure are apparent from the claims, the description, and the accompanying drawings.

According to an independent aspect of the present disclosure, a method for routing a plurality of vehicles is provided. The method includes a receiving of a plurality of user requests each requesting a vehicle, wherein each of the plurality of user requests includes a start position and an end position; an assigning, to each vehicle of the plurality of vehicles, a (fixed) number n of slots representing a path of the vehicle; and a calculating (step), for each vehicle of the plurality of vehicles, a respective route based on the plurality of user requests and the slots. The method may be used in combination with a recurrent neural network (RNN) architecture.

Preferably, the calculating (step) is performed repeatedly. Each calculating step may be a decoding time step.

Preferably, the calculating includes generating input cells, wherein each of the input cells includes a respective permutation of a request, a vehicle and a slot, and wherein the calculating is based on the input cells.

Preferably, the input cells are used in combination with a recurrent neural network (RNN) architecture.

Preferably, the input cells are generated using Request-Vehicle, RV, Graph.

Preferably, each input cell has a plurality of dynamic features associated therewith.

Preferably, the plurality of dynamic features are selected from the group including, or consisting of, a cost of assignment; a number of outgoing edges in Request-Vehicle, RV, Graph; a number of available vehicles; and a regret value.

Preferably, the cost of assignment is the cost of insertion for a request at all possible insertion positions of the input cells.

Preferably, the method further includes mapping the input cells to a higher dimensional space.

Preferably, the method further includes removing input cells which have essentially zero probability.

Preferably, the method further includes selecting an input cell having a highest probability.

Preferably, the selecting is performed by a Greedy Decoder.

Preferably, the method further includes changing at least one dynamic feature of the plurality of dynamic features.

Preferably, the method further includes re-calculating, for each vehicle of the plurality of vehicles, a respective route based on the changed at least one dynamic feature. Each calculating and re-calculating step may be a decoding time step.

Preferably, the calculating includes minimizing an overall objective cost.

Preferably, the method further includes navigating the plurality of vehicles according to the calculated routes.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

According to a further aspect of the present disclosure, a machine-readable medium is provided. The machine-readable medium includes instructions executable by one or more processors to implement the method of the embodiments of the present disclosure.

The (e.g. non-transitory) machine readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to an independent aspect of the present disclosure, a system for routing a plurality of vehicles is provided. The system includes one or more processors; and a memory (e.g. the above machine-readable medium) coupled to the one or more processors and comprising instructions executable by the one or more processors to implement the method of the embodiments of the present disclosure.

Preferably, the system is a server and/or a backend.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1     shows a flowchart of a method for routing a plurality of vehicles according to embodiments described herein, which may be used in combination with a recurrent neural network (RNN) architecture;

FIG. 2     shows a schematic view of a system for routing a plurality of vehicles according to embodiments described herein;

FIG. 3     shows a comparison of an initial solution building using NN models and other LNS insertion heuristics; and

FIG. 4     shows a comparison of a solution quality of a trained NN as sole insertion operator inside LNS, trained NN inside ALNS along with other operators, and ALNS with only traditional insertion operators.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

### 1. Introduction

Machine Learning (ML) techniques can be used for discreet optimization problems. Further, Pointer Networks (Ptr-Net) can be applied to simpler Vehicle Routing Problem (VRP) with limited applicability. According to the present disclosure, fixed slots are added to this approach to make it applicable to RH scenarios. The number of slots can vary without retraining the network. Furthermore, contrary to, for example, reinforcement learning, the preset disclosure may use supervise learning for training.

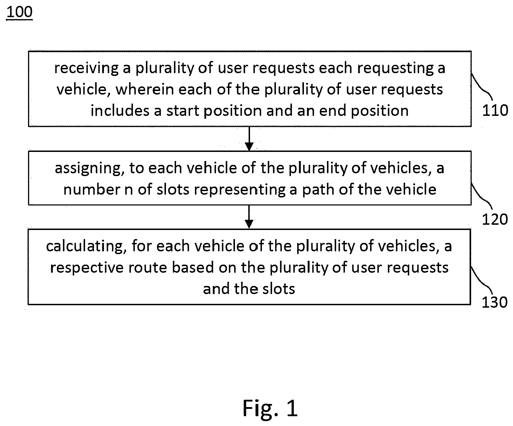

FIG. 1 shows a flowchart of a method 100 for routing a plurality of vehicles which uses slots, which may be used in combination with a recurrent neural network (RNN) architecture. The method 100 includes in block 110 a receiving of a plurality of user requests each requesting a vehicle, wherein each of the plurality of user requests includes a start position and an end position; in block 120 an assigning, to each vehicle of the plurality of vehicles, a number $n$ of slots representing a path of the vehicle; and in block 130 a calculating, for each vehicle of the plurality of vehicles, a respective route based on the plurality of user requests and the slots.

According to embodiments described herein, the method for routing a plurality of vehicles can be conducted by means of computer programs, software, computer software products and the interrelated controllers, which can have a CPU, a memory, a user interface, and input and output means.

The architecture of the present disclosure can build good vehicle routes for RH services. Optionally, looking at the effectiveness of Large Neighborhood Search (LNS) for VRPTW, the above approach which uses the slots can be combined with LNS by using the trained network as an insertion operator. Thus, embodiments of the present disclosure may benefit from past runs of similar RH problems using Machine Learning (ML) techniques, and get better quick assignment solutions.

The embodiments of the present disclosure allow for a more efficient building of vehicle routes for a plurality of vehicles. Each vehicle of the plurality of vehicles may be navigated according to the determined routing. For example, the embodiments of the present disclosure may be used in a navigation system of the plurality of vehicles. The more efficient routing can reduce vehicle emissions, such as carbon dioxide emission. Further, the more efficient routing can reduce fuel consumption in case of a combustion engine, and can reduce a consumption of electrical energy in case of an electrical or hybrid drive.

## 2. Methodology

### 2.1 Introductory Remarks

Consider a fleet $V$ of size $m$ and a set $R$ of $l$ requests. For a RH scenario, it is assumed that each vehicle can serve only one request at a time. For each request $r \in R$, there is a pickup location $r_p$, a drop-off location $r_d$ and the time $t_r$ when the requestee wants to be picked up. The time it takes to travel from $r_p$ to $r_d$ is given as $T_r$. For each vehicle v $\in V$, let $P_v \subseteq R$ be a set of requests assigned to $v$, and $T_v$ be the total duration that v will take to serve the requests in $P_v$. It is assumed that after serving all requests in $P_v$ the vehicle stays at the drop-off location of the last request. Let $d_{max}$ be a constant indicating the maximum delay allowed for picking up a request. Then, for each request $r$, the allowed pickup time window is given as $[t_r, t_r + d_{max}]$. For each vehicle $v \in V$, let $A_{rv}$ be the vehicle arrival time at the pickup location of the request $r$.

The delay for the customer pickup can be calculated as $delay_{rv} = max (0, A_{rv} - t_r)$. Lastly, let $c_r$ be 1 if request $r$ is not covered by any vehicle, otherwise 0. With the above notations, the multi-objective function for the matching problem is given by:

$$\min \alpha \sum_{v \in V} T_v + \beta \sum_{v \in V} \sum_{r \in P_v} delay_{rv} + \delta \sum_{r \in R} c_r \qquad (1)$$

where the three terms represent the amount of time traveled by vehicles, the pickup delay of the served customers and the number of unserved customers, respectively. $\alpha$ and $\beta$ are constant weights for the relative importance of the total travel time of all the vehicles and the total delay to the customers, respectively. $\delta$ is a relatively heavy weight for serving the maximum number of customer requests.

In the following, an exemplary overall methodology is described. It starts with the preprocessing step of RV Graph, followed by a brief description of LNS, and finally a detailed description of the NN is given.

### 2.2 Pairwise Request-Vehicle (RV) Graph

First an RV graph is preprocessed to reduce the complexity of the RH matching problem and help in the implementation of the algorithms. It is based on forward time slack and RV graph. A pairwise directed graph for vehicles and requests is computed, with negative edges representing pairwise time slack and positive edges representing the pairwise delay for the pickup. A directed RV graph $G(N, E)$ is considered with set $N = V \cup R$ as nodes and edges $E$ defined as follows:

For a vehicle $v \in V$ and a request r E $R$, the edge $(v,r) \in E$ if $T_{vr} + t_s - t_r \leq d_{max}$, with a weight $e = T_{vr} + t_s - t_r$; where $T_{vr}$ is the traveling time from the vehicle location to the pickup point of $r$ and $t_s$ is the start time of the vehicle. This implies that starting from the current location, the vehicle can pick up the request with a delay less than $d_{max}$.

Similarly for two requests $r_1$ and $r_2$, the edge $(r_1, r_2) \in E$, with weight $e = T_{r1r2} + T_{r1} + t_{r1} - t_{r2}$, if $T_{r1r2} + T_{r1} + t_{r1} - t_{r2} \leq d_{max}$; where $T_{r1}$ is the travel time from pickup to drop-off location of $r_1$ and $T_{r1r2}$ is the distance from drop-off of $r_1$ to pickup of $r_2$ (and vice versa for edge $(r_2, r_1) \in E$. This means that an imaginary vehicle starting at the pickup point of $r_1$, drops off $r_1$ first, and then goes and picks up $r_2$ such that the delay for picking up $r_2$ is less than $d_{max}$.

**2.3 Large Neighborhood Search (LNS)**

LNS is based on the idea of exploring such a large neighborhood of the solution that it is almost impossible to explore it explicitly. In terms of VRPTW, this corresponds to removing q percent requests and inserting them back using a variety of removal and insertion operators respectively, as it is shown in the following algorithm:

$$
\begin{aligned}
&\textbf{function } \text{SOLVE}(sol \in solutions) \\
&\quad s_{best} \leftarrow sol \\
&\quad \textbf{while } \text{stop-criterion not fulfilled } \textbf{do} \\
&\quad\quad \grave{s} \leftarrow sol \\
&\quad\quad \text{remove } q \text{ requests from } \grave{s} \\
&\quad\quad \text{reinsert removed requests into } \grave{s} \\
&\quad\quad \textbf{if } f(\grave{s}) < f(s_{best}) \textbf{ then} \\
&\quad\quad\quad s_{best} \leftarrow \grave{s} \\
&\quad\quad \textbf{if } \text{accept}(\grave{s}, sol) \textbf{ then} \\
&\quad\quad\quad sol \leftarrow \grave{s} \\
&\quad \textbf{return } s_{best}
\end{aligned}
$$

The initial solution is first built using an insertion operator. Generally, LNS can be effective for VRPTW with pickup and drop off. In particular, a roulette wheel based adaptive scheme for dynamically selecting greedy and (2-, 3-, 4- and k-) regret insertions, and random, shaw and worst removals can be introduced ("ALNS").

LNS operators and the corresponding solution is used for training the NN. However, to adapt the algorithm to the RH scenario, it is considered that every vehicle has its own station or start location. Furthermore, a trained NN based insertion operator for final testing can be introduced as follows:

**LSTM based Insertion:** The basic aim of using LSTM based insertion inside LNS is to benefit from the past runs on similar problems. Assigning a request to a vehicle path, one at a time, is like a sequence. Conventional insertion operators inside LNS look at various details of the request vehicle combinations and assign a suitable request to a vehicle's path. An LSTM based network can learn to make such a decision by looking at various features. The details of the used LSTM network architecture are discussed later.

**2.4 Neural Network Architecture**

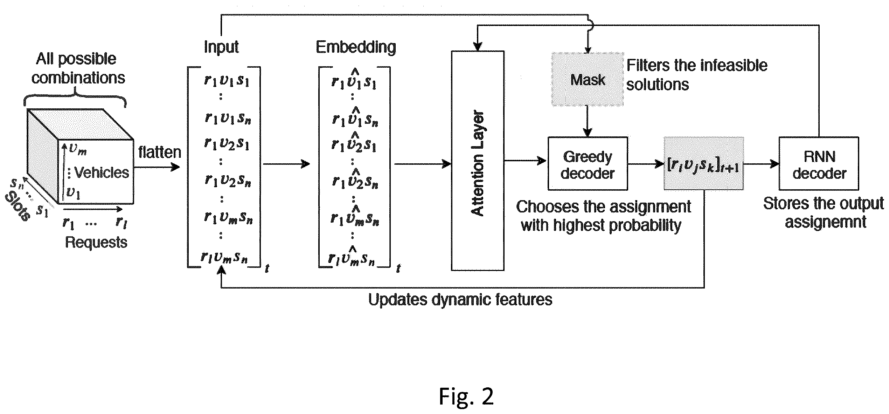

FIG. 2 shows an exemplary system which represents a NN architecture. The NN architecture is based on a model using dynamic features that are updated before every decoder time step. One can follow the same approach of replacing the Recurrent Neural Network (RNN) encoder presented in the Ptr-Net with an embedding layer for mapping the input to a D-dimensional vector space since the input is not sequentially dependent.

The architecture is generalized to cater for multiple vehicles and the pickup time windows of each customer request. For this purpose, every vehicle $v_j \in V$ is assigned a fixed number of slots $n$, representing the path of the vehicle. $n$ can be adjusted for different problem sizes without the need of retraining. The model also improves the vehicle path at every decoding time step in order to minimize the overall objective cost. However, in this path correction it guarantees that the request $r_i$ would still be served by $v_j$ (to which it was first assigned) but it can be assigned to a later slot $s_k \in S$ of $v_j$.

**Model overview** The input includes, or consists of, three distinct sets which are: requests, vehicles and slots. These sets are permuted together to generate every possible combination using RV graph. Each cell of the permuted sets has its own dynamic features that change at every decoding step. Then the input cells are mapped to a higher dimensional space using an embedding layer as shown in FIG. 2. At the output, a greedy decoder chooses one specific input (of highest probability) which represents an assignment of a request at a slot within a vehicle's path. The output at every time step is dependent on all the input permutations $X_t$ at the current time step and the outputs of the previous time steps $y_1 .... y_{t-1}$. Probabilities over different inputs are calculated with an attention mechanism.

**Input features** Each input cell includes, or is composed of, four features, all of which are dynamic, i.e., change every time step depending on the assignment at $t-1$. No static feature is used. The dynamic features are:

1. The cost of assignment: This feature is similar to the incremental cost $\Delta f_{rv}$ used in the basic greedy insertion operator for LNS. However, unlike basic greedy, the cost of insertion for $r$ at all the possible insertion positions within $v$ is used. Since all the vehicles are assumed to be empty at the beginning, initially only the cost of assigning requests in the first slot to vehicles is calculated. When a request $r_i$ is assigned to vehicle $v_j$, the cost of assignment to $v_j$ is

recalculated for all requests, that would include the first slot before $r_i$ and the second slot after it. These possible insertion slots keep increasing as more requests are assigned to $v_j$. While inserting $r_i$ in $v_j$ at an intermediate slot $s_k$ it is made sure that the requests previously assigned to $v_j$ at $s_a$ where $a \geq k$ would be served in their predefined time window. Otherwise, $s_k$ would not be considered as an insertion option for $r_i$ in $v_j$ and would be masked out. Costs are further normalized by dividing them by the penalty term of neglecting a request.

2. Number of outgoing edges in RV Graph: This feature takes a look one step further in time. For a cell of $r_i v_j s_k$, it considers the number of requests from the set of unmatched requests $U$ that can still be added to the path of $v_j$ at $s_b$ where $b \in [1, n]$, while satisfying the time constraints for the set of requests $P_{vj}$ already in $v_j$ path. The number of outgoing edges for each input cell is divided by the total number of requests in the problem to be in the range *[0, 1]*.

3. Number of available vehicles: It considers the total number of vehicles that are able to serve $r_i$ considering the current path of the vehicles and the time window of the $r_i$. This feature is request specific such that $r_i v_j s_k$ is the same $\forall j \in [1, m]$ & $k \in [1, n]$. In other words, this feature does not change for the same request and a different vehicle. The value of this feature is divided by the total number of vehicles in the problem for normalization.

4. Regret value: This is also a request specific feature. It is based on the 2-regret insertion concept. Intuitively, it keeps track of the difference between the best and second-best insertion cost for a given request. For a request that has just one insertion option available, its regret value is calculated by subtracting its insertion cost from the penalty weight $\delta$ of neglecting a request.

**Mask function** The mask function keeps track of the assignments that are infeasible according to the time window constraints. These infeasible assignments are guaranteed to have a probability of zero and thus they would never be selected by the decoder. If all the inputs have zero probability, then the decoding stops. This also makes sure that there could be no more valid assignments, and thus, the remaining requests (if any) will remain unassigned.

**Loss function** It is beneficial to train the neural network to generate solutions whose total cost is minimized. Therefore, the total objective cost of the solutions from the network should be as close as possible to the training solutions. Since these training solutions are not solved up to optimality, one can add an "*argmax block*" to make sure that the network will not be over-trained with bad solutions. The number of unassigned requests per solution are multiplied by the penalty term $\delta$. Then, the loss is further divided by the ground truth solution to account for different magnitudes when the problem size is different.

$$L(\theta) = \frac{1}{B} \sum_{b=0}^{B} \frac{1}{C_{GT}^b} \max\left(\left(\left(\sum_{t=0}^{T^b} c_t^b\right) + \left((l^b - T^b) \times \delta\right) - C_{GT}^b\right), [0] \times B\right) \cdot \sum_{t=0}^{T^b} \log p_\theta(y_t^b)$$

$$(2)$$

where $\theta$ represents the learnable network parameters. $B$ is the batch size, $C_{GT}^b$ is the ground truth objective cost (approximated here) for the whole problem $b$, $l^b$ is the total number of requests for the problem and $T^b$ is the number of output time steps from the decoder. $c_t$ is the cost of the assignment chosen at decoding time step $t$ and $y_t$ is the probability of the output at this time.

## 3. Computational Experiments

Taxi data have been used for generating requests and vehicles. Vehicles were generated by choosing the trip start positions randomly from the data. Requests were generated for different working days in the morning. Only the trip start time, start location and end location were used for generating the requests. Then Open Source Routing Machine (OSRM) was used for calculating the travel time between different locations.

Multiple problem instances were generated for the training with the number of vehicles fixed to 10 and varying only the number of requests between *{10, 20, 30, 40}*. Each problem size is denoted by $m^{a|b}$, where $a$ and $b$ represent the number of used vehicles and requests in the problem instance, respectively. For each problem size, 1000 samples were generated for training and 300 for testing. Since it is challenging to solve the problem instances up to optimality for the mentioned problem sizes and time windows, LNS with 2-regret insertion and shaw removal operator was used for finding the solutions. LNS was run for 2000 iterations for each of the problem instance and the solutions were used as ground truth for the training process.

Three different models were trained which are:

1. Specific model with $n > 1$: This model was trained separately on each problem instance until convergence using transfer learning. It was first trained on $m^{10}l^{10}$, then starting from the same weights on $m^{10}l^{20}$, then $m^{10}l^{30}$ and finally on $m^{10}l^{40}$. A number of slots of $n = 6$ was used.

2. General model: This model was trained on all the problem instances at once. Each batch contains problems of different sizes. The number of slots was $n = 6$ as well.

3. General model with $n = 1$: In this model, the requests are always appended at the end of a vehicle's path, i.e. $n = 1$. This eases the model as the features have to be calculated for just one position. This model is specifically important to build vehicle paths incrementally without rescheduling the already assigned requests. Ideally, when one has perfect features for the insertion of unassigned request, such a model should be able to build a vehicle path optimally by just looking at the dynamic features in the current decoder time step with much less computation time. Therefore, one can include such a model in the analysis to test how close the features are to such an ideal scenario.

The encoder hidden size is set to 128 and the number of layers in the LSTM decoder network to 2. A batch size of 64 samples was used and it was trained for 500 epochs (enough for convergence). The GPU device used for training is Nvidia quadro M4000 with 8GB memory. Each epoch containing instances of all the problem sizes for the general model with $n > 1$ takes around 10.4 minutes while it takes around 7.2 minutes for the model with $n = 1$.

## 4. Results

In this section the results of the computational experiments are discussed.

## 4.1 Initial solution comparison

In this section the performance of the three models against the 2-regret and basic greedy insertion heuristics for building the initial solution is compared. Furthermore, since testing is done for a model that only inserts the new requests at the last position, i.e. Generic Model with $n = 1$, it is reasonable to also test the approaches against modified versions of 2-regret and basic greedy insertions that only insert the unassigned requests at the last position of the vehicle's path. These modified 2-regret and basic greedy is presented by putting $n = 1$.

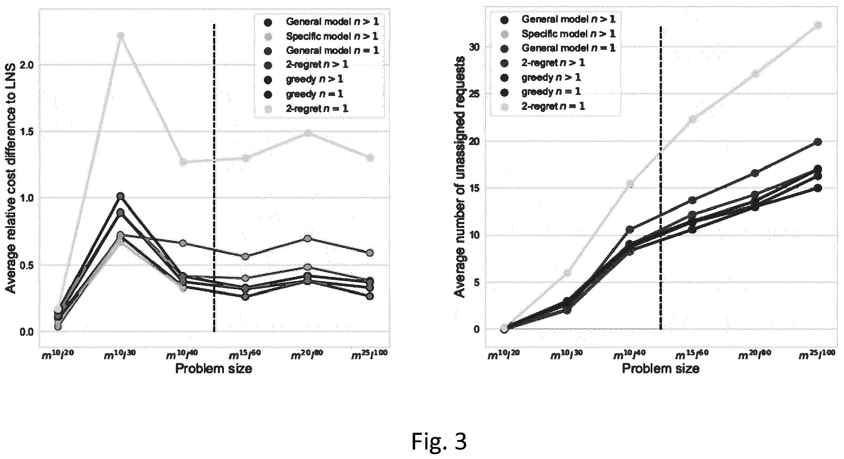

FIG. 3 compares the initial solutions' mean relative objective cost difference to 2000 iteration of LNS and the number of unassigned requests for various insertion strategies. In the simple problem of $m^{10}l^{20}$, all the methods provide very similar solutions. However, when the problem becomes more complicated, the general model with $n > 1$ provides better solutions. Additionally, for $m^{10}$, and $l^i$ where $i \in \{20, 30, 40\}$, the general model's performance is almost the same as the specific model which is trained on every problem size individually. This is important to ensure that the loss function used is invariant to the magnitude of the problem size. Furthermore, this shows that the general model has already learned what to do in each time step regardless of the size of the problem. This is also confirmed when the model is tested on instances of more than double the sizes it was trained on (right side of the dashed line) where the overall cost for the general model is better than the other heuristics. This verifies the fact that the model can generalize and scale well to larger problem instances without retraining.

Besides inside actual LNS, the initial solution approach can be used in a real-time dynamic environment to provide the user with a quick reply when there is no time available for batch optimization.

## 4.2 Trained Neural Network as insertion operator inside LNS

As introduced above, one can analyze the performance of the trained NN when used inside LNS as an insertion operator. For this analysis, one can use only the general model with n > 1, as they give best solution quality for the initial solution. It can be compared against the ALNS scheme, as multiple LNS operators are almost always better with the adaptive scheme. Additionally, one can also test the trained NN along with other operators in ALNS.

Each problem instance was run multiple times with each of the used procedures. For this experiment, 10 problems for each problem size were selected. Each problem is solved 5 times for each of the procedures with 2000 iterations. One can take the mean of the 5 solutions and compare it against the best-found solution for each of the problems. Hence, the formula used to calculate the solution quality for a problem i using procedure j is given by:

$$(solution\ quality)_i^j = \frac{\frac{1}{5}\sum_{k=1}^{5} cost_k^j}{cost_{best}^i} \qquad (3)$$

where $cost_{best}^i$ is the objective cost of the best solution found for problem $i$ regardless of the procedure used and

$cost_j^k$ is the objective cost of the solution obtained using procedure $j$ and the $k$th run.

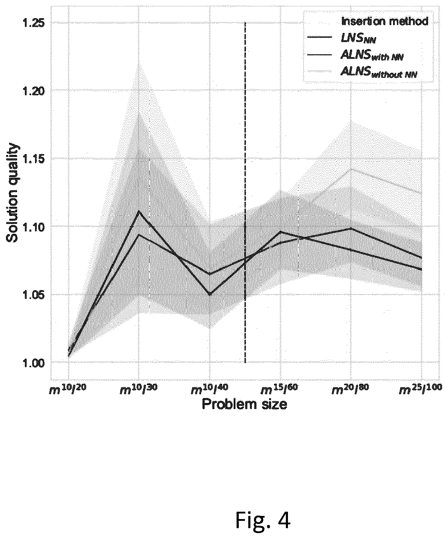

FIG. 4 compares the mean solution quality of the NN based LNS, ALNS with NN and traditional ALNS. All procedures are run for 2000 iterations. For small sized problems $m^{10|20}$, all the procedures provide similar quality as the problem is already simple to solve. However, for increasing problem complexity, the NN based approaches are continuously seen to be performing better than the traditional ALNS. For finding good solutions with a limited number of iterations and increasing complexity, it is crucial that good requests insertion decisions are taken earlier. The trained network is able to take such decisions even for the problem sizes for which the network has never been trained, i.e. ($m^{15|60}$, $m^{20|80}$ and $m^{25|100}$). This shows that the trained model learned how to pick better insertion requests based on seen solutions. Ideally, if one had a perfect set of features and trained model, then one could expect the LNS to converge in a single iteration. However, in the absence of that, one can expect the solution to converge earlier to the best solution if one uses better features.

### 5. Conclusion

The present disclosure discloses, according to a first independent aspect, a concept of a fixed number of slots n for generalizing the NN model for a RH scenario. The modification can be used with any VRPTW with minor changes. The experiments show that the network learned how to make good request insertion decisions. The general model with $n > 1$ provided the best solution quality, even for the problem sizes on which it was never trained. Ideally, a perfect NN with perfect features set would build a solution with just $n = 1$.

According to a second independent aspect of the present disclosure, which can be combined with the first independent aspect, the trained NN is used inside LNS and ALNS as an insertion operator which showed an improvement over the traditional ALNS. Such a NN based insertion has great potential inside LNS, as various information that is generally used by individual insertion operators separately for making insertion decisions can be combined together inside a single NN.

While the foregoing is directed to embodiments of the disclosure, other and further embodiments of the disclosure may be devised without departing from the basic scope thereof, and the scope thereof is determined by the claims that follow.

### Claims

1. Method (100) for routing a plurality of vehicles, comprising:

   receiving (110) a plurality of user requests each requesting a vehicle, wherein each of the plurality of user requests includes a start position and an end position;
   assigning (120), to each vehicle of the plurality of vehicles, a number n of slots representing a path of the vehicle; and
   calculating (130), for each vehicle of the plurality of vehicles, a respective route based on the plurality of user requests and the slots.

2. The method of claim 1, wherein the calculating (130) includes:
   generating input cells, wherein each of the input cells includes a respective permutation of a request, a vehicle and a slot, and wherein the calculating (130) is based on the input cells, in particular wherein the input cells are used in combination with a recurrent neural network architecture.

3. The method of claim 2, wherein the input cells are generated using Request-Vehicle, RV, Graph.

4. The method of claim 2 or 3, wherein each input cell has a plurality of dynamic features associated therewith.

5. The method of claim 4, wherein the plurality of dynamic features are selected from the group consisting of:

a cost of assignment;
a number of outgoing edges in Request-Vehicle, RV, Graph;
a number of available vehicles; and
a regret value.

**6.** The method of claim 5, wherein:
the cost of assignment is the cost of insertion for a request at all possible insertion positions of the input cells.

**7.** The method of any one of claims 2 to 6, further including:
mapping the input cells to a higher dimensional space.

**8.** The method of any one of claims 2 to 7, further including:
removing input cells which have essentially zero probability.

**9.** The method of any one of claims 2 to 8, further including:
selecting an input cell having a highest probability.

**10.** The method of claim 9, wherein the selecting is performed by a Greedy Decoder.

**11.** The method of any one of claims 4 to 6, further including:

changing at least one dynamic feature of the plurality of dynamic features; and
re-calculating, for each vehicle of the plurality of vehicles, a respective route based on the changed at least one dynamic feature.

**12.** The method of any one of claims 1 to 11, wherein the calculating (130) includes:
minimizing an overall objective cost.

**13.** The method of any one of claims 1 to 12, further including:
navigating the plurality of vehicles according to the calculated routes.

**14.** A machine readable medium comprising instructions executable by one or more processors to implement the method of any one of claims 1 to 13.

**15.** A system for routing a plurality of vehicles, comprising:

one or more processors; and
a memory coupled to the one or more processors and comprising instructions executable by the one or more processors to implement the method of any one of claims 1 to 13.

<u>100</u>

```
┌─────────────────────────────────────────────────┐
│  receiving a plurality of user requests each     │ ╲
│  requesting a vehicle, wherein each of the       │  ╲
│  plurality of user requests includes a start     │   110
│  position and an end position                    │
└─────────────────────────────────────────────────┘
                        │
                        ▼
┌─────────────────────────────────────────────────┐
│  assigning, to each vehicle of the plurality of  │ ╲
│  vehicles, a number n of slots representing a    │  ╲
│  path of the vehicle                             │   120
└─────────────────────────────────────────────────┘
                        │
                        ▼
┌─────────────────────────────────────────────────┐
│  calculating, for each vehicle of the plurality  │ ╲
│  of vehicles, a respective route based on the    │  ╲
│  plurality of user requests and the slots        │   130
└─────────────────────────────────────────────────┘
```

Fig. 1

Fig. 2

Fig. 3

Fig. 4

Europäisches
Patentamt

European
Patent Office

Office européen
des brevets

# EUROPEAN SEARCH REPORT

Application Number

EP 19 18 9037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Arslan Ali Syed ET AL: "Neural Network Based Large Neighborhood Search Algorithm for Ride Hailing Services : 19th EPIA Conference on Artificial Intelligence, EPIA 2019, Vila Real, Portugal, September 3-6, 2019, Proceedings, Part I" In: "RoboCup 2008: RoboCup 2008: Robot Soccer World Cup XII", 1 January 2019 (2019-01-01), Springer International Publishing, Cham 032682, XP055624551, ISSN: 0302-9743 ISBN: 978-3-319-10403-4 vol. 11804, pages 584-595, DOI: 10.1007/978-3-030-30241-2_49, * the whole document * | 1-15 | INV. G06Q10/06 |
| X | US 2018/231984 A1 (ALONSO-MORA JAVIER [ES] ET AL) 16 August 2018 (2018-08-16) * paragraphs [0009] - [0036]; claims; figures * | 1-15 | |
| | ----- | | TECHNICAL FIELDS SEARCHED (IPC) |
| X | MOHAMMADREZA NAZARI ET AL: "Deep Reinforcement Learning for Solving the Vehicle Routing Problem", ARXIV.ORG, CORNELL UNIVERSITY LIBRARY, 201 OLIN LIBRARY CORNELL UNIVERSITY ITHACA, NY 14853, 12 February 2018 (2018-02-12), XP081221187, * page 1 - page 8 * | 1-15 | G06Q G05D |

-/--

The present search report has been drawn up for all claims

| Place of search | Date of completion of the search | Examiner |
|---|---|---|
| Munich | 25 September 2019 | Herry, Tzvetanka |

page 1 of 2

Europäisches
Patentamt

European
Patent Office

Office européen
des brevets

**EUROPEAN SEARCH REPORT**

Application Number

EP 19 18 9037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARSLAN ALI SYED ET AL: "Neural Network-Based Metaheuristic Parameterization with Application to the Vehicle Matching Problem in Ride-Hailing Services", TRANSPORTATION RESEARCH RECORD., 16 May 2019 (2019-05-16), XP055624542, US ISSN: 0361-1981, DOI: 10.1177/0361198119846099 * the whole document *  ----- | 1-15 | |

TECHNICAL FIELDS
SEARCHED (IPC)

The present search report has been drawn up for all claims

| Place of search | Date of completion of the search | Examiner |
|---|---|---|
| Munich | 25 September 2019 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
                                                                     
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 9037

This annex lists the patent family members relating to the patent documents cited in  the above-mentioned European search report.
The members are as contained in the European Patent Office EDP file on
The European Patent Office is in no way liable for these particulars which are merely given for the purpose of information.

25-09-2019

| Patent document cited in search report | Publication date | Patent family member(s) | Publication date |
|---|---|---|---|
| US 2018231984 A1 | 16-08-2018 | NONE | |

For more details about this annex : see Official Journal of the European Patent Office, No. 12/82

EPO FORM P0459